# EUROPEAN PATENT SPECIFICATION

(11) **EP 3 598 954 B1**
(45) Date of publication and mention of the grant of the patent: **08.09.2021**
(21) Application number: 19187495.7
(22) Date of filing: 22.07.2019
(51) Int. Cl.: A61C 3/16

(54) **VIBRATING CROWN AND BRIDGE REMOVER**
VIBRIERENDER KRONEN- UND BRÜCKENENTFERNER
DISPOSITIF VIBRANT DE RETRAIT DE COURONNES ET DE BRIDGES

(30) Priority: 25.07.2018 US 201816044618; 20.06.2019 CA 3047461
(43) Date of publication of application: 29.01.2020
(73) Proprietor: Pona, Zbigniew, Windsor, Ontario N8Y 4T9 (CA)
(72) Inventor: Pona, Zbigniew, Windsor, Ontario N8Y 4T9 (CA)
(74) Representative: Maiwald Patent- und Rechtsanwaltsgesellschaft mbH

(56) References cited:
- DE-B- 1 297 810
- JP-A- H1 057 401
- US-A- 2 777 198
- US-A1- 2008 248 446

## Description

### FIELD OF THE INVENTION

The present invention generally relates to a vibrating dental tool and corresponding method for the removal of crowns and bridges. The term dental "crown" relates to removal tools and apparatuses utilized for the removal of dental crowns or dental bridges and other like dental structures.

### BACKGROUND OF THE INVENTION

Vibrating dental tools and, in particular, ultrasonic dental tools are known. U.S. Pat. No. 5,320,532 (Farzin-Nia et al.) teaches an ultrasonic tool for fracturing the interface between dental structures and, specifically, for the removal of orthodontic bands or brackets from teeth after the completion of treatment. The working tip of the tool may be wedge-shaped, flat or needle shaped. In one embodiment, a pair of spaced projections are disposed on either side of an engaging surface to provide a receiving area for the bracket to minimize slipping off. In use, the tip of the tool is placed against a bracket and ultrasonic energy is transferred through the bracket to the adhesive layer.

U.S. Pat. No. 5,733,119 (Carr) teaches a microsurgical drill bit, which can be connected to an ultrasonic transducer. The drilling tips are angled and may have bent end portions to permit the tool to be held at a comfortable angle.

While drilling devices and simple devices for the removal of adhesively connected dental structures are known, there is a need for a dental tool adapted for the removal of crowns and bridges.

The crowning and bridging of teeth is a common practice in dentistry. There are a number of indications for crowns and bridges. Some of the more common indications are: heavily restored teeth with little of the original teeth left; following root canal treatments; and bridges for the replacement of missing teeth. Crowns and bridges may also be used for aesthetic reasons.

When a tooth is prepared for a crown, the practitioner removes or shaves off the surface of the tooth to a depth of approximately 1.5 millimeter (mm). The practitioner generally then cements a temporary crown to the tooth. The practitioner then generally awaits lab work on the tooth, before cementing in a permanent crown.

There are many instances where a practitioner must remove a crown or bridge. One common instance is the removal of a temporary crown. This may prove particularly challenging where the temporary crown fits tightly over the original tooth. Another common instance is the removal of a permanent crown that has been temporarily cemented. This might occur, for example, where the practitioner wishes to obtain approval of the crown from the patient before permanently securing it. This might also occur where the practitioner wishes to ensure that tooth sensitivity will subside before permanently securing a crown.

Other common instances may arise after a crown has been permanently secured. For example, removal of a crown is required where there is a cavity underneath it and the practitioner does not wish to cut the crown to provide treatment. Similarly, a crown may need to be removed where it is necessary to perform a root canal on the underlying tooth. Yet another instance might be where one crown of a bridge becomes loose and the practitioner must remove the other crowns of the bridge in order to re-cement the bridge.

Existing crown removal tools generally involve the application of a blunt force to the crown, which often results in broken or fractured crowns or teeth. This can add complexity and expense to a dental procedure and, in addition, may cause additional discomfort to a patient. The inventor is aware of an ultrasonic crown removal tool, the ATD Automatic Crown & Bridge Remover by J. Morita, USA, Inc. This tool consists of ultrasonic steel string arranged as a loop and a pneumatic hook that attaches to a hand piece that causes slow movement of the hook. The steel string, while designed to assist with separating the crown from the root, suffers from a number of drawbacks. The steel string is difficult to position if the teeth are close together. Further, if the crown-tooth interface is smooth, the string will not catch at this position. The string also has trouble penetrating the crown-tooth junction. Finally, due to the application of pressure on one side of the crown or tooth-crown junction, the crown almost invariably breaks during the removal procedure, which adds to the complexity and expense of the procedure.

In the most recent chronicles of development of dental crown removal tools, U.S. Pat. No. 8,162,661 (Pona) brought forth a dental crown removal with substantial advantages over the prior art. Pona provides a dental crown removal tool with superior vertical grip on the crown on the tooth, while at the same time minimizing the transverse (or horizontal) force placed on the crown. Explained in a different manner, the Pona dental crown removal tool can apply superior pull force on the crown without slipping off the dental structure and without horizontally crushing the underlying tooth underneath the crown.

US 2008/248446 A1 discloses a dental crown removal apparatus having an arm, a first jaw and a second jaw, wherein the first and the second jaws are not in a pivotal connection with said arm.

It is therefore desirable to provide a dental crown removal tool that exceeds the advantages brought forth by Pona and other dental crown removal tools currently known.

### SUMMARY OF THE INVENTION

Accordingly, the present invention relates to a device that avoids the disadvantages of the prior art devices, while according benefits, as described below. In one embodiment, the present invention endows a freedom of a dental crown removal apparatus having a handle for placement in an operator's hand. An elongated post projecting along a first axis is connected for reciprocal motion with respect to the handle. A motor is provided in the handle for moving the post. A tool adaptor is connected with the post generally opposite the handle. The tool adaptor has a saddle for placement on the post. The tool adaptor has an extension arm extending away from the handle. The tool adaptor has a pivot arm connected with the extension arm and spaced from the handle. First and second jaws are provided having independent and unitary pivotal connection with the pivot arm. Claw ends of the jaws are spring biased together.

According to a first aspect of the invention there is provided a dental crown removal apparatus comprising: a handle; an elongated post projecting along a first axis, said post being connected for reciprocal motion with respect to said handle along said first axis; a motor for moving said post; a tool adapter connected with said post along an end of said post generally opposite said handle, said tool adapter having an extension arm extending away from said handle with a pivot arm connected with said extension arm spaced from said handle; and first and second opposing jaws having claw ends spring biased together, said first and second jaws having independent and unitary pivotal connection with said pivot arm.

According to an embodiment, said first and second jaws pivot in a plane parallel with said first axis.

According to an embodiment, said first and second jaws pivot in a plane bisecting said post.

According to an embodiment, both said first and second jaws have eyelet pivotal connections with said pivot arm that are laterally separated from one another by said plane bisecting said post.

According to an embodiment, said extension arm is lateral of said first axis a first distance and said jaws pivot in a plane lateral of said first axis at a distance from said first axis less than said first distance, wherein jaws' pivotal plane is more adjacent to said extension arm than to said first axis.

According to an embodiment, said at least one of said first and second jaws has an eyelet to pivot on said pivot arm.

According to an embodiment, said first and second jaws have twin eyelets.

According to an embodiment, one of said jaw eyelets laterally fits within the eyelets of said other jaw.

According to an embodiment, a torsion spring provides said spring biasing.

According to an embodiment, a spring providing said spring biasing of said claw ends together with said first and second jaws has ends nested in said first and second jaws_{.}

According to an embodiment, one of said jaws has an adjustable length.

According to an embodiment, the apparatus is provided with a wave spring biasing a lateral position of at least one of said jaws with respect to said pivot arm. According to an embodiment of the invention the wave spring can be realized by a wave washer.

According to an embodiment, one of said jaws has a tooth that juxtaposes two teeth of said opposing jaw. According to an embodiment of the invention both jaws may have two teeth, one thereof engaging the two teeth of the opposing jaw. According to an embodiment of the invention one of the jaws has an even number of teeth and the other jaw has an uneven number of teeth.

According to an embodiment, a screw holds said jaws to said pivot arm. According to an embodiment, the pivot arm serves as a bearing for the jaws.

According to an embodiment, a pivotal axis of said jaws intersects said post first axis.

According to an embodiment, said pivot arm can rotate with respect to said handle.

According to an embodiment, one of said jaw eyelets laterally fits within said other jaw eyelets, and said jaw having eyelets fitting within eyelets of said other jaw has a tooth juxtaposing two teeth of said other jaw.

According to a second aspect of the invention there is provided a dental crown removal apparatus comprising: a handle; an elongated post projecting along a first axis, said post being connected for reciprocal motion with respect to said handle along said first axis; a motor for moving said post; a tool adapter connected with said post along an end of said post generally opposite said handle, said tool adapter having a saddle for placement on said post, said tool adapter having an extension arm extending from said saddle, said tool adapter having a pivot arm perpendicularly connected with said extension arm and spaced from said handle; an upper jaw having a pivotal connection with said pivot arm; a lower jaw opposing said upper jaw, said lower jaw having a pivotal connection with said pivot arm; a spring biasing a claw end of said jaws together; and wherein said upper and lower jaws pivot in a plane bisecting said post.

According to an embodiment, said saddle can rotate on said post.

According to a third aspect of the invention there is provided a dental crown removal apparatus comprising: a handle; an elongated post projecting along a first axis, said post being connected for reciprocal motion with respect to said handle along said first axis; a motor for moving said post; a tool adapter connected with said post along an end of said post generally opposite said handle, said tool adapter being rotatable with respect to said handle, said tool adapter having an extension arm extending away from said handle, said tool adapter having a cylindrically-shaped pivot arm perpendicularly connected with said extension arm and spaced from said handle; an upper jaw having a pivotal connection with said pivot arm via twin spaced apart eyelets; an adjustable length lower jaw opposing said upper jaw, said lower jaw having a pivotal connection with said pivot arm via twin eyelets, said upper jaw eyelets laterally fitting within said lower jaw eyelets; a torsion spring biasing a claw end of said jaws together, said torsion spring having a coil portion encircling said pivot arm; and wherein said upper and lower jaws pivot in a plane that is parallel with and laterally offset from said first axis and said jaws have independent and unitary pivotal connection with said pivot arm.

According to an embodiment of any of the first to fourth aspect of the invention, a frequency of reciprocal motion of said post is adjustable.

Herein is also disclosed a method of removing a dental structure from an underlying tooth comprising: compressing a rearward end of each of an upper jaw and a lower jaw thereby allowing the upper jaw and lower jaw to open for placement over the dental structure, wherein the length of the lower jaw is adjustable; placing the upper and lower jaws over the dental structure and adjusting the length of the lower jaw until the upper and lower jaws engage with the dental structure; activating a motor to operably cause the lower jaw and upper jaw to be vibrationally accelerated away from the dental structure, thereby removing the dental structure from the underlying tooth.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The following drawings illustrate examples of various components of the invention disclosed herein, and are for illustrative purposes only. Other embodiments that are substantially similar can use other components that have a difference appearance, without deviating from the invention described.
Figure 1 is a top plan view of an embodiment of a dental vibrating crown and bridge remover (herein after referred to as the dental crown remover) according to the present invention;
Figure 2 is a side plan view of the dental crown remover shown in Figure 1;
Figure 3 is an enlargement of the jaws of the dental crown remover shown in Figure 1 with the jaws shown in a closed position;
Figure 4 is an enlargement of the jaws of the dental crown remover jaws shown in Figure 2;
Figure 5 is an enlarged and exploded view of the dental crown remover jaws shown in Figure 1;
Figure 6 is an enlarged perspective view of the dental crown remover jaws shown in Figure 1;
Figure 7 is a reverse view of the dental crown remover shown in Figure 3 with the jaws in an open position;
Figure 8 is a perspective view of an alternate preferred embodiment dental crown remover according to the present invention;
Figure 9 is a perspective view of a handle of an alternate preferred embodiment dental crown remover according to the present invention;
Figure 10 is a sectional view of the jaws of a dental crown remover as shown along lines 10 - 10 in Figure 13;
Figure 11 is a sectional view of the jaws of the dental crown remover along lines 11 - 11 of Figure 14;
Figure 12 is a exploded view of the claws of an alternate preferred embodiment dental crown remover;
Figure 13 is a side elevational view of the jaws of the dental crown remover shown in Figures 10 - 12;
Figure 14 is a side elevational view of the jaws of the dental crown remover shown in Figures 10 - 16;
Figure 15 is a sectional of the dental crown remover jaws taken along lines 15 - 15 of Figure 13;
Figure 16 is a sectional view taken through the eyelets of the lower jaw shown in Figure 12; and
Figure 17 is an operational view of the dental crown remover shown in Figure 1 in the environment of a patient's mouth.

### DETAILED DESCRIPTION OF THE PREFERRED EMBODIMENTS

The following description of the embodiments of the present invention is in nature and is in no way intended to limit the invention, its application, or uses.

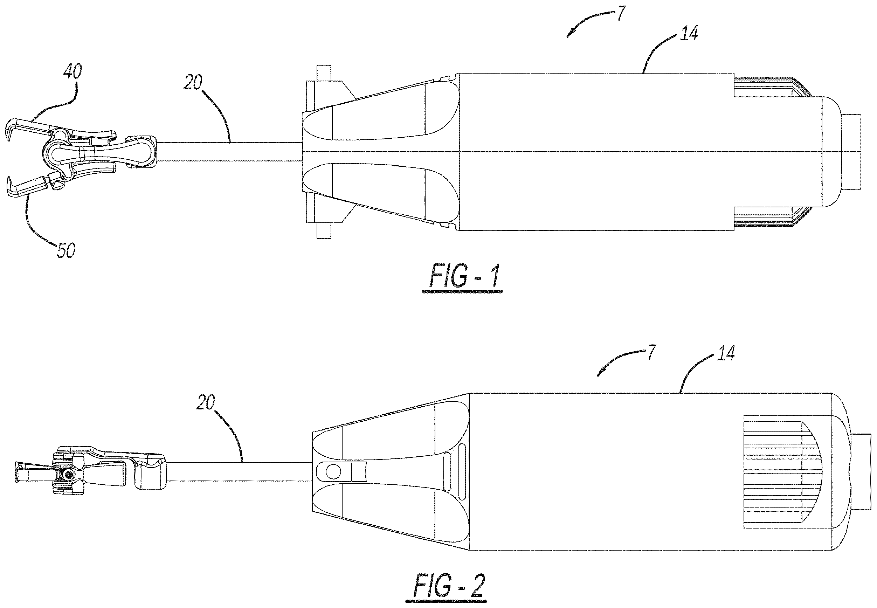

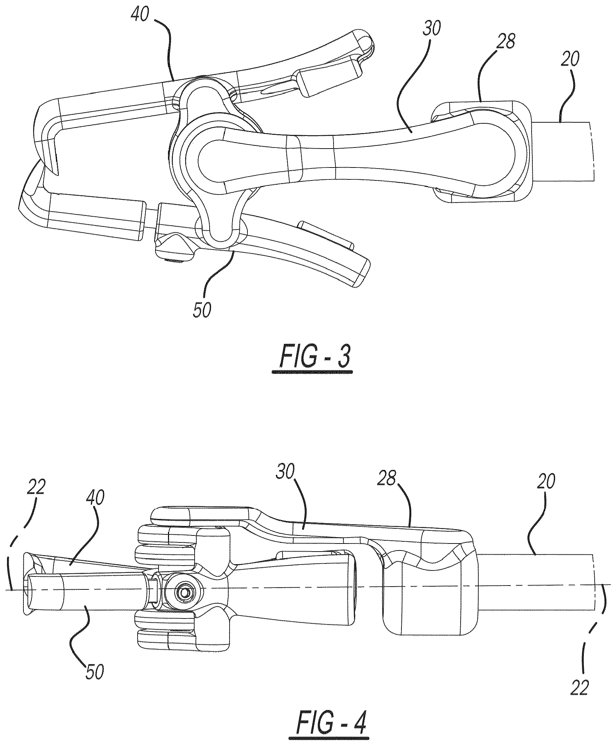

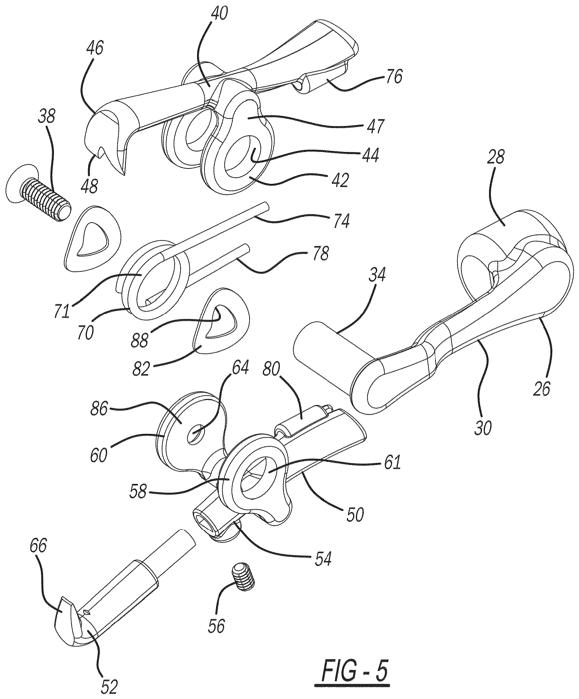

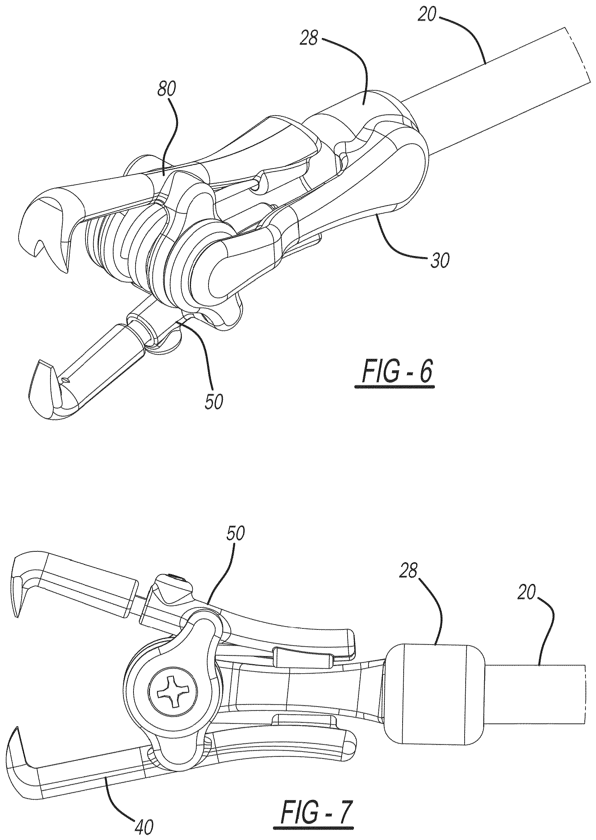

Referring to Figures 1 - 7, an embodiment of a dental crown remover 7 is provided. The dental crown remover 7 has a handle 14 for placement in an operator's hand. Preferably, handle 14 contains a motorized vibrator, preferably in the form of a vibrating alternating transducer for generating reciprocal or vibrating motion. A power source for the ultrasonic transducer is typically provided by a externally connected power source housed in handle 14. In an alternate embodiment, handle 14 may be powered by batteries, or by any other power source. Vibratory dental handles or transducer heads are commonly used in the art in conjunction with cleaning tips. The particular configuration of the handle is not restricted and is within the purview of a person skilled in the art. Manually operable control button or buttons may be provided on handle 14 for powering the crown remover 7 on and off and for varying the frequency amplitude of vibration along a range of settings. The number of frequency settings is not particularly restricted and is within the purview of a person skilled in the art. Rather than discrete frequency settings, the frequency may be adjustable along a spectrum. The frequency may be set from 0 vibrations to 110 Hz (6600 per minute) with a pulse travel of 1 mm, as an example. The pulse travel and power of the vibration can also be adjustable along discrete settings or can be made continually adjustable. Typically a dental professional will start at 0 Hz and increase the frequency to maximum setting.

An elongated post 20 is provided. Projecting along a first axis 22, post 20 is connected for reciprocal motion with respect to the handle 14 along the first axis 22. A tool adaptor 26 is connected on the post 20 along an end of the post 20 generally opposite the handle 14. Tool adaptor 26 has a cylindrical-shaped saddle 28. Due to its cylindrical shape, the saddle 28 can rotate on the post 20. Tool adaptor 26 has an extension arm 30 extending from the saddle 28. Perpendicularly connected to the extension arm 30 is a pivot arm 34 being generally cylindrical in shape. On its far end, the extension arm 34 has a drilled opening that is threaded for reception of a flat head machine screw 38. An upper jaw 40 is provide having a pivotal connection with the pivot arm 34. The upper jaw 40 is typically fabricated from stainless steel or titanium. The upper jaw 40 has twin eyelets 42. The eyelets 42 have a cylindrical aperture 44 to allow pivotal connection on the pivot arm 34. A claw end 46 of the upper jaw 40 has two wedge-shaped teeth 48. The jaw 40 pivots in a plane that is parallel and co-terminus with the first axis 22.

Opposing the upper jaw 40 is a lower jaw 50. Lower jaw 50 is an adjustable length jaw having a claw 52 that may be inserted into a main body 54 for the lower jaw. The claw's position with respect to the main body 54 is set by utilization of a set screw 56. The lower jaw 50 also has twin eyelets 58 and 60. Eyelet 58 is pivotally mounted upon pivot arm 34 by its cylindrical aperture 61. The opposite eyelet 60 is held to the pivot post 34 by virtue of eyelet by being pivotally mounted on the machine screw 38 via its aperture 64. The twin eyelets 42 (of the upper jaw) are laterally fitted within the eyelets of the lower jaw. The lower jaw claw 52 has a tooth 66 that juxtaposes two teeth 48 of the upper jaw. Both the upper jaw 40 and the lower jaw 50 pivot in a plane that intersects the longitudinal and vibrational axis of the post 8. A torsional spring 70 is provided to compliantly bias the teeth 66 and 48 of the lower and upper jaws, respectively together. The spring 70 is typically made out of a 316 stainless steel material. Torsion spring 70 has a coil body 71 encircling the pivot arm 34. Torsion spring 70 has a spring arm 74 captured in a nest 76 of the upper jaw. The spring arm 74 typically is laterally restrained by the nest 76. The spring 70 also has another leg 78 captured within the nest 80 provided by the lower jaw, and additionally tends to laterally press against the nest 80 to ensure its capture within. A wave washer spring 82 is captured between a surface 47 of the upper jaw eyelet and an inner surface 86 of eyelet 58. The wave washer has an aperture 88 allowing for its placement over pivot arm 34. In a similar manner, a wave washer 82 is placed between the eyelets 60 and 42.

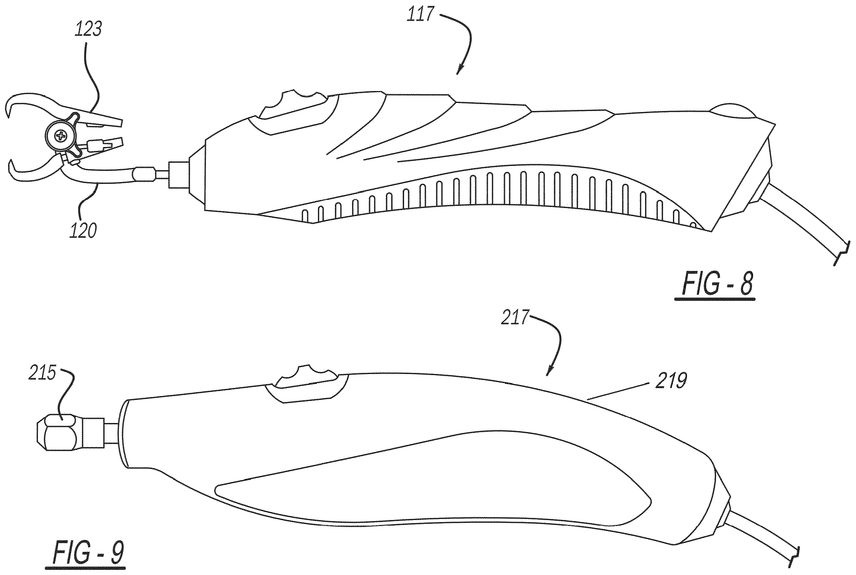

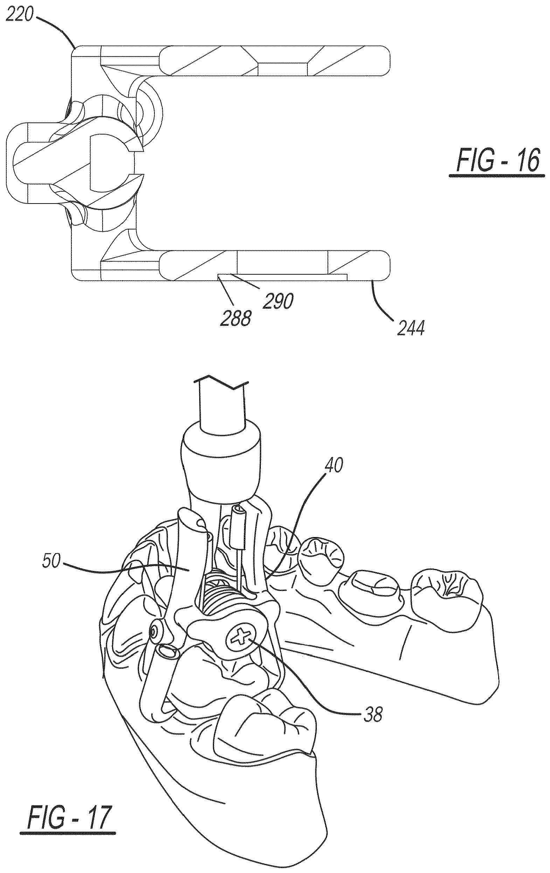

In operation, a dentist compresses a rearward end of the jaws to allow them to open up for placement over the dental structures (see Figure 17). The length of the lower jaw is adjusted to customize the fitting. The dentist uses a switch on the handle to activate the motor causing the post to be vibrationally accelerated upwards, lifting off the dental structures. Referring to Figure 8, an embodiment of the present invention shows dental crown remover 117, which has a curved post 120. The jaw structure 123 in this embodiment is essentially identical to that previously described.

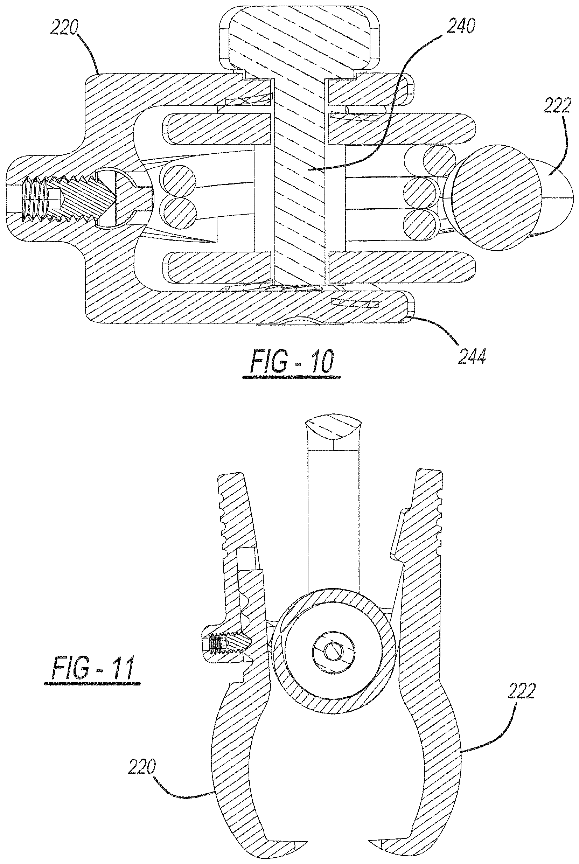

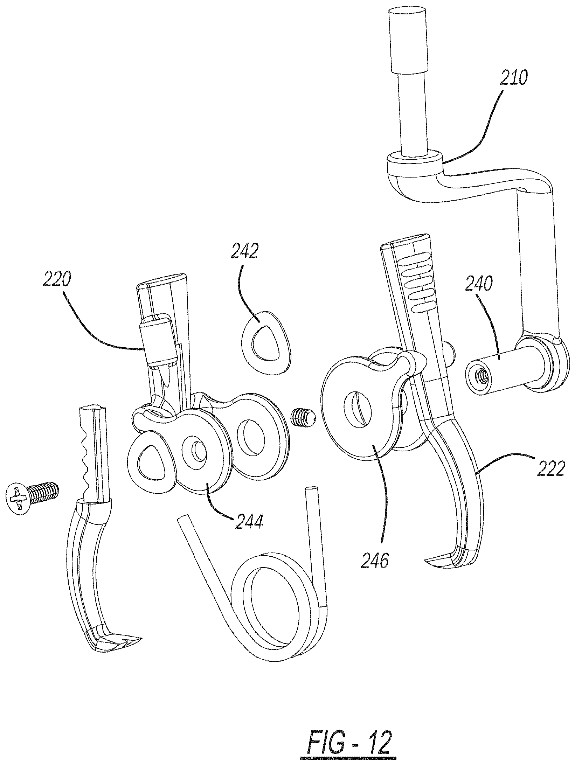

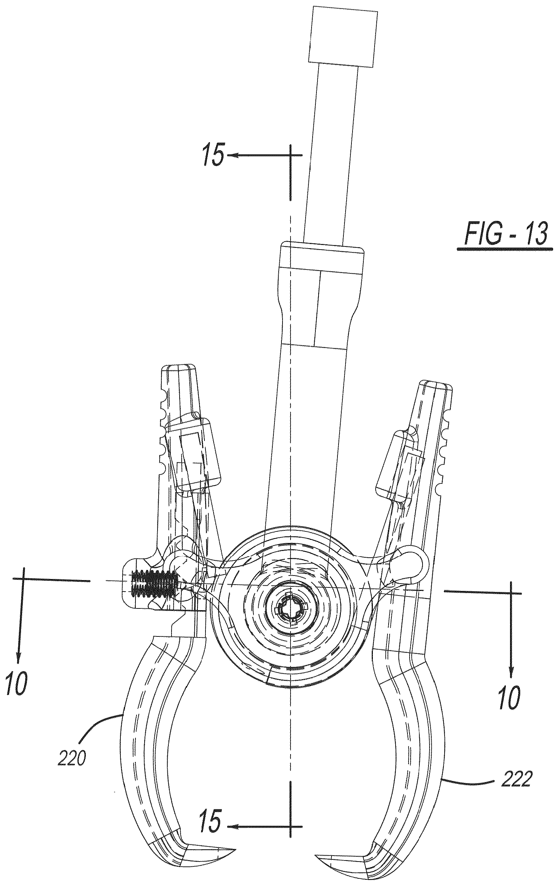

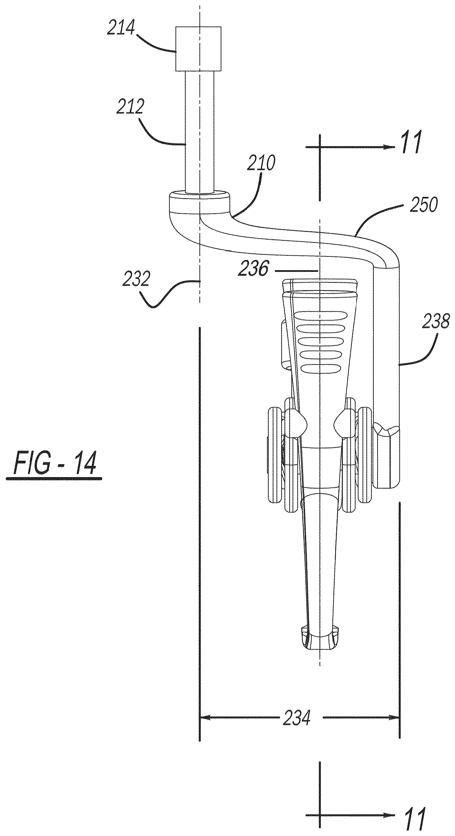

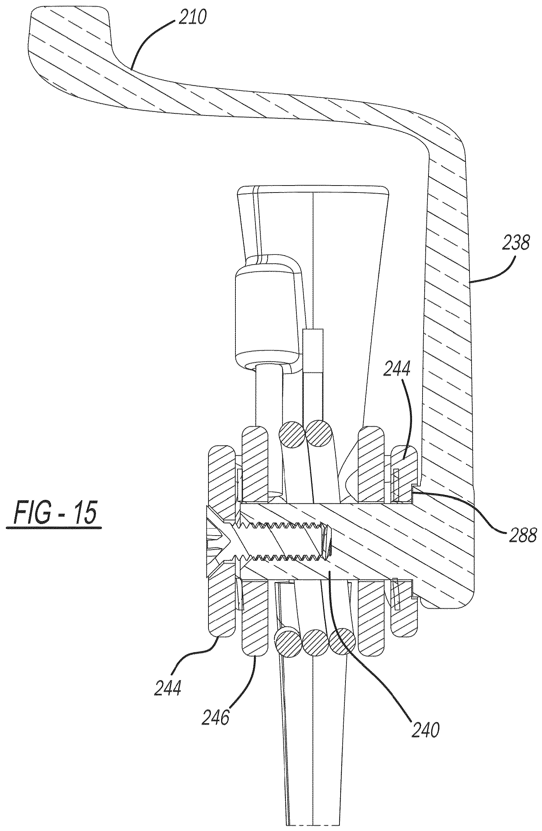

Referring to Figures 9 to 16, an alternate embodiment of a dental crown remover 217 is provided. Dental crown remover 217 has a tool adaptor 210 with a post extension 212. Post extension 212 has a cylindrical head 214 that rotationally fits within a collet 215 to allow the tool adaptor 210 to rotate with respect to the handle 219. Dental crown remover 217 has an inner jaw 220 and outer jaw 222 substantially similar to that of the dental crown remover 7 previously described. The tool adaptor 210 has a lateral arm 250 that extends a distance 234 lateral of the post first axis 232 (see Figure 14).

The jaws 220 and 222 pivot in a plane 236 that is parallel to the axis 232. Plane 236 is more adjacent to axis 232 than the extension arm 238. However, plane 236 is closer to extension arm 238 than it is to axis 232. In a manner similar to the dental crown remover 7 previously described, dental crown remover 207 has unitary pivotal connection with the pivot arm 240. Unitary pivotal connection refers to the jaws 220 and 222 pivoting as a single unit about the pivot arm 240 when the jaws 220, 222 are spring biased together.

If one of the jaws 220, 222 is engaged with a tooth, the other jaw can be independently pivoted about the pivot arm 240. Wave washers 242 are positioned between eyelets 244 of jaw 220 and eyelets 246 of jaw 222. The wave washers 242 add angular friction to the rotational unitary pivotal connection of the jaws 220 and 222 on the pivot arm 240 to keep them from pivoting too freely. This can be adjusted to meet the desire of the dental professional utilizing the crown remover 207.

Eyelet 244 on a side adjacent to post arm 238 has an annular indentation 290 to align with an annular shoulder 288 adjacent a base of the pivot arm 280 (Figure 16). This shoulder/indentation fit further aligns the jaw 220 with the pivot arm 280.

Various embodiments of the present invention have been described above in detail by way of example and it will be apparent to those skilled in the art that variations and modifications may be made without departing from the invention. The invention includes all such variations and modification as fall within the scope of the claims.

## Claims

1. A dental crown removal apparatus comprising:
a handle (14);
an elongated post (20) projecting along a first axis (22), said elongated post (20) being connected for reciprocal motion with respect to said handle (14) along said first axis;
a motor for moving said elongated post (20);
a tool adapter (26) connected with said elongated post (20) along an end of said elongated post (20) generally opposite said handle (14), said tool adapter (26) having an extension arm (30) extending away from said handle (14) with a pivot arm (34) connected with said extension arm (30) spaced from said handle (14); and
first and second opposing jaws (40, 50) having claw ends (46) spring biased together, **characterized in that** said first and second jaws have independent and unitary pivotal connection with said pivot arm (34).

2. The dental crown removal apparatus as described in claim 1, wherein said first and second jaws (40, 50) pivot in a plane parallel with said first axis (22).

3. The dental crown removal apparatus as described in any one of claims 1 to 2, wherein said first and second jaws (40, 50) pivot in a plane bisecting said elongated post (20),
wherein in particular both said first and second jaws (40, 50) have eyelet (42, 58, 60) pivotal connections with said pivot arm (34) that are laterally separated from one another by said plane bisecting said elongated post (20).

4. The dental crown removal apparatus as described in any one of claims 1 to 3 wherein said extension arm (30) is lateral of said first axis (22) a first distance and said jaws (40, 50) pivot in a plane lateral of said first axis (22) at a distance from said first axis less than said first distance, and wherein jaws' pivotal plane is more adjacent to said extension arm (30) than to said first axis.

5. The dental crown removal apparatus as described in any one of claims 1 to 4 wherein said at least one of said first and second jaws (40, 50) has an eyelet (42, 58, 60) to pivot on said pivot arm (34),
wherein in particular said first and second jaws (40, 50) have twin eyelets (42, 58, 60),
wherein in particular one of said jaw eyelets (42) laterally fits within the eyelets (58, 60) of said other jaw (50).

6. The dental crown removal apparatus as described in any one of claims 1 to 5 wherein a torsion spring (70) provides said spring biasing.

7. The dental crown removal apparatus as described in any one of claims 1 to 6 wherein a spring (70) providing said spring biasing of said claw (40, 50) ends together with said first and second jaws (40, 50) has ends (74, 78) nested in said first and second jaws, and/or
wherein one of said jaws (40, 50) has an adjustable length.

8. The dental crown removal apparatus as described in any one of claims 1 to 7 having a wave spring (82) biasing a lateral position of at least one of said jaws (40, 50) with respect to said pivot arm (34).

9. The dental crown removal apparatus as described in any one of claims 1 to 8 wherein one of said jaws (50) has a tooth (66) that juxtaposes two teeth (48) of said opposing jaw (40), and/or
wherein a screw (38) holds said jaws (40, 50) to said pivot arm (34), and/or
wherein a pivotal axis of said jaws (40, 50) intersects said post first axis (22), and/or
wherein said pivot arm (34) can rotate with respect to said handle (14).

10. The dental crown removal apparatus as described in any one of claims 3 to 9, wherein one of said jaw eyelets (58, 60) laterally fits within said other jaw eyelets (44), and said jaw (40) having eyelets (44) fitting within eyelets (58, 60) of said other jaw (50) has a tooth (66) juxtaposing two teeth (48) of said other jaw (40).

11. A dental crown removal apparatus comprising:
a handle (14);
an elongated post (20) projecting along a first axis (22), said elongated post (20) being connected for reciprocal motion with respect to said handle (14) along said first axis;
a motor for moving said elongated post (20);
a tool adapter (26) connected with said elongated post (20) along an end of said elongated post (20) generally opposite said handle (14), said tool adapter having a saddle (28) for placement on said elongated post (20), said tool adapter (26) having an extension arm (30) extending from said saddle, said tool adapter (26) having a pivot arm (34) perpendicularly connected with said extension arm (30) and spaced from said handle (14);
an upper jaw (40) having a pivotal connection with said pivot arm (34);
a lower jaw (50) opposing said upper jaw (40);
a spring biasing a claw end (46) of said jaws (40, 50) together; and
**characterized in that** said lower jaw (50) has a pivotal connection with said pivot arm (34), and **in that** said upper and lower jaws (40, 50) pivot in a plane bisecting said post (20)

12. The dental crown removal apparatus as described in claim 11 wherein said saddle (28) can rotate on said post (20).

13. A dental crown removal apparatus comprising:
a handle (219);
an elongated post (212) projecting along a first axis (232), said elongated post (212) being connected for reciprocal motion with respect to said handle (219) along said first axis;
a motor for moving said elongated post (212);
a tool adapter (210) connected with said elongated post (212) along an end of said elongated post (212) generally opposite said handle (219), said tool adapter (210) being rotatable with respect to said handle (219), said tool adapter (210) having an extension arm (238) extending away from said handle (219), said tool adapter (210) having a cylindrically-shaped pivot arm (240) perpendicularly connected with said extension arm and spaced from said handle (219);
an upper jaw (220) having a pivotal connection with said pivot arm (240) via twin spaced apart eyelets (244);
an adjustable length lower jaw (222) opposing said upper jaw (220), said lower jaw having a pivotal connection with said pivot arm (240) via twin eyelets (246), said upper jaw eyelets (244) laterally fitting within said lower jaw eyelets (246);
said dental crown removal apparatus being **characterized in that** it further comprises
a torsion spring biasing a claw end of said jaws together, said torsion spring having a coil portion encircling said pivot arm (240); and
**in that** said upper and lower jaws (220, 222) pivot in a plane that is parallel with and laterally offset from said first axis (212) and said jaws have independent and unitary pivotal connection with said pivot arm (232).

14. A dental crown removal apparatus as described in any one of claims 1 to 13 wherein a frequency of reciprocal motion of said elongated post (20, 212) is adjustable.

## Patentansprüche

1. Zahnkronenentfernungsvorrichtung, umfassend:
einen Griff (14);
einen lang gestreckten Stab (20), der entlang einer ersten Achse (22) hervorsteht, wobei der lang gestreckte Stab (20) für eine Hin- und Herbewegung in Bezug auf den Griff (14) entlang der ersten Achse verbunden ist;
einen Motor zum Bewegen des lang gestreckten Stabes (20) ;
einen Werkzeugadapter (26), der entlang eines Endes des lang gestreckten Stabes (20), das dem Griff (14) allgemein gegenüberliegt, mit dem lang gestreckten Stab (20) verbunden ist, wobei der Werkzeugadapter (26) einen Verlängerungsarm (30) aufweist, der sich von dem Griff (14) weg erstreckt, wobei beabstandet von dem Griff (14) ein Schwenkarm (34) mit dem Verlängerungsarm (30) verbunden ist; und
einander gegenüber, eine erste und eine zweite Backe (40, 50) mit per Feder zueinander hin vorgespannten Klauenenden (46),
**dadurch gekennzeichnet, dass** die erste und zweite Backe eine unabhängige und einstückige Schwenkverbindung mit dem Schwenkarm (34) aufweisen.

2. Zahnkronenentfernungsvorrichtung nach Anspruch 1, wobei die erste und zweite Backe (40, 50) in einer Ebene schwenken, die zu der ersten Achse (22) parallel ist.

3. Zahnkronenentfernungsvorrichtung nach einem der Ansprüche 1 bis 2, wobei die erste und zweite Backe (40, 50) in einer Ebene schwenken, die den lang gestreckten Stab (20) schneidet,
wobei insbesondere sowohl die erste als auch die zweite Backe (40, 50) über Ösen (42, 58, 60) Schwenkverbindungen mit dem Schwenkarm (34) aufweist, die seitlich durch die Ebene, die den lang gestreckten Stab (20) schneidet, voneinander getrennt sind.

4. Zahnkronenentfernungsvorrichtung nach einem der Ansprüche 1 bis 3, wobei der Verlängerungsarm (30) sich mit einem ersten Abstand seitlich der ersten Achse (22) befindet und die Backen (40, 50) in einer Ebene schwenken, die sich mit einem Abstand von der ersten Achse, der kleiner ist als der erste Abstand, seitlich der ersten Achse (22) befindet, und wobei die Schwenkebene der Backen dem Verlängerungsarm (30) näher ist als der ersten Achse.

5. Zahnkronenentfernungsvorrichtung nach einem der Ansprüche 1 bis 4, wobei die wenigstens eine der ersten und zweiten Backe (40, 50) eine Öse (42, 58, 60) aufweist, um an dem Schwenkarm (34) zu schwenken,
wobei insbesondere die erste und zweite Backe (40, 50) Doppelösen (42, 58, 60) aufweisen,
wobei insbesondere eine der Backenösen (42) seitlich in die Ösen (58, 60) der anderen Backe (50) passt.

6. Zahnkronenentfernungsvorrichtung nach einem der Ansprüche 1 bis 5, wobei eine Drehfeder (70) die Federvorspannung bereitstellt.

7. Zahnkronenentfernungsvorrichtung nach einem der Ansprüche 1 bis 6, wobei eine Feder (70), welche die Federvorspannung der Klauenenden (40, 50) zueinander hin mit der ersten und zweiten Backe (40, 50) bereitstellt, Enden (74, 78) aufweist, die in der ersten und zweiten Backe aufgenommen sind, und/oder
wobei eine der Backen (40, 50) eine verstellbare Länge aufweist.

8. Zahnkronenentfernungsvorrichtung nach einem der Ansprüche 1 bis 7 mit einer Wellenfeder (82), die eine seitliche Position wenigstens einer der Backen (40, 50) in Bezug auf den Schwenkarm (34) vorspannt.

9. Zahnkronenentfernungsvorrichtung nach einem der Ansprüche 1 bis 8, wobei eine der Backen (50) einen Zahn (66) aufweist, der neben zwei Zähnen (48) der gegenüberliegenden Backe (40) liegt, und/oder
wobei eine Schraube (38) die Backen (40, 50) an dem Schwenkarm (34) hält und/oder
wobei eine Schwenkachse der Backen (40, 50) die erste Achse (22) des Stabes schneidet und/oder
wobei der Schwenkarm (34) sich in Bezug auf den Griff (14) drehen kann.

10. Zahnkronenentfernungsvorrichtung nach einem der Ansprüche 3 bis 9, wobei eine der Backenösen (58, 60) seitlich in die anderen Backenösen (44) passt und die Backe (40) mit den Ösen (44), die in die Ösen (58, 60) der anderen Backe (50) passen, einen Zahn (66) aufweist, der neben zwei Zähnen (48) der anderen Backe (40) liegt.

11. Zahnkronenentfernungsvorrichtung, umfassend:
einen Griff (14);
einen lang gestreckten Stab (20), der entlang einer ersten Achse (22) hervorsteht, wobei der lang gestreckte Stab (20) für eine Hin- und Herbewegung in Bezug auf den Griff (14) entlang der ersten Achse verbunden ist;
einen Motor zum Bewegen des lang gestreckten Stabes (20) ;
einen Werkzeugadapter (26), der entlang eines Endes des lang gestreckten Stabes (20), das dem Griff (14) allgemein gegenüberliegt, mit dem lang gestreckten Stab (20) verbunden ist, wobei der Werkzeugadapter einen Sattel (28) zur Anordnung auf dem lang gestreckten Stab (20) aufweist, wobei der Werkzeugadapter (26) einen Verlängerungsarm (30) aufweist, der sich von dem Sattel aus erstreckt, wobei der Werkzeugadapter (26) einen Schwenkarm (34) aufweist, der rechtwinklig mit dem Verlängerungsarm (30) verbunden und von dem Griff (14) beabstandet ist;
eine obere Backe (40), die eine Schwenkverbindung mit dem Schwenkarm (34) aufweist;
eine untere Backe (50), die der oberen Backe (40) gegenüberliegt;
eine Feder, die ein Klauenende (46) der Backen (40, 50) zueinander hin vorspannt; und
**dadurch gekennzeichnet, dass** die untere Backe (50) eine Schwenkverbindung mit dem Schwenkarm (34) aufweist, und dadurch, dass die obere und untere Backe (40, 50) in einer Ebene schwenken, die den Stab (20) schneidet.

12. Zahnkronenentfernungsvorrichtung nach Anspruch 11, wobei der Sattel (28) sich auf dem Stab (20) drehen kann.

13. Zahnkronenentfernungsvorrichtung, umfassend:
einen Griff (219);
einen lang gestreckten Stab (212), der entlang einer ersten Achse (232) hervorsteht, wobei der lang gestreckte Stab (212) für eine Hin- und Herbewegung in Bezug auf den Griff (219) entlang der ersten Achse verbunden ist;
einen Motor zum Bewegen des lang gestreckten Stabes (212) ;
einen Werkzeugadapter (210), der entlang eines Endes des lang gestreckten Stabes (212), das dem Griff (219) allgemein gegenüberliegt, mit dem lang gestreckten Stab (212) verbunden ist, wobei der Werkzeugadapter (210) in Bezug auf den Griff (219) drehbar ist, wobei der Werkzeugadapter (210) einen Verlängerungsarm (238) aufweist, der sich von dem Griff (219) weg erstreckt, wobei der Werkzeugadapter (210) einen zylindrisch geformten Schwenkarm (240) aufweist, der rechtwinklig mit dem Verlängerungsarm verbunden und von dem Griff (219) beabstandet ist;
eine obere Backe (220), die über beabstandete Doppelösen (244) eine Schwenkverbindung mit dem Schwenkarm (240) aufweist;
eine längenverstellbare untere Backe (222), die der oberen Backe (220) gegenüberliegt, wobei die untere Backe über Doppelösen (246) eine Schwenkverbindung mit dem Schwenkarm (240) aufweist, wobei die Ösen (244) der oberen Backe seitlich in die Ösen (246) der unteren Backe passen;
wobei die Zahnkronenentfernungsvorrichtung **dadurch gekennzeichnet ist, dass** sie ferner umfasst:
eine Drehfeder, die ein Klauenende der Backen zueinander hin vorspannt, wobei die Drehfeder einen Spulenabschnitt aufweist, der den Schwenkarm (240) umgibt; und
dadurch, dass die obere und untere Backe (220, 222) in einer Ebene schwenken, die parallel zu der ersten Achse (212) und seitlich von dieser versetzt ist, und die Backen eine unabhängige und einstückige Schwenkverbindung mit dem Schwenkarm (232) aufweisen.

14. Zahnkronenentfernungsvorrichtung nach einem der Ansprüche 1 bis 13, wobei eine Frequenz der Hin- und Herbewegung des lang gestreckten Stabes (20, 212) einstellbar ist.

## Revendications

1. Dispositif de retrait de couronne dentaire comprenant :
un manche (14) ;
une tige allongée (20) faisant saillie le long d'un premier axe (22), ladite tige allongée (20) étant connectée pour un mouvement de va-et-vient par rapport audit manche (14) le long dudit premier axe ;
un moteur pour le déplacement de ladite tige allongée (20) ;
un adaptateur d'outil (26) relié à ladite tige allongée (20) le long d'une extrémité de ladite tige allongée (20) généralement opposée audit manche (14), ledit adaptateur d'outil (26) comportant un bras d'extension (30) s'étendant à distance dudit manche (14) avec un bras de pivotement (34) relié audit bras d'extension (30) et espacé dudit manche (14) ; et
des première et deuxième mâchoires opposées (40, 50) présentant des extrémités de mâchoire (46) sollicitées ensemble par ressort,
**caractérisé en ce que** lesdites première et deuxième mâchoires présentant une connexion pivotante indépendante et unitaire avec ledit bras de pivotement (34).

2. Dispositif de retrait de couronne dentaire selon la revendication 1, dans lequel lesdites première et deuxième mâchoires (40, 50) pivotent dans un plan parallèle audit premier axe (22).

3. Dispositif de retrait de couronne dentaire selon l'une quelconque des revendications 1 à 2, dans lequel lesdites première et deuxième mâchoires (40, 50) pivotent dans un plan coupant ladite tige allongée (20),
dans lequel en particulier la première et deuxième mâchoires (40, 50) comportant toutes deux des connexions pivotantes d'œillet (42, 58, 60) avec ledit bras de pivotement (34), lesquelles sont espacées latéralement les unes des autres par ledit plan coupant ladite tige allongée (20) .

4. Dispositif de retrait de couronne dentaire selon l'une quelconque des revendications 1 à 3, dans lequel ledit bras d'extension (30) est latéral par rapport audit premier axe (22) selon une première distance et lesdites mâchoires (40, 50) pivotent dans un plan latéral dudit premier axe (22) sur une distance dudit premier axe inférieure à ladite première distance, et dans lequel le plan de pivotement des mâchoires est plus adjacent audit bras d'extension (30) qu'audit premier axe.

5. Dispositif de retrait de couronne dentaire selon l'une quelconque des revendications 1 à 4, dans lequel ladite au moins une parmi lesdites première et deuxième mâchoires (40, 50) comporte un œillet (42, 58, 60) pour pivoter sur ledit bras de pivotement (34),
dans lequel en particulier lesdites première et deuxième mâchoires (40, 50) comportent des œillets doubles (42, 58, 60),
dans lequel en particulier l'un des œillets de mâchoire (42) s'ajuste latéralement dans les œillets (58, 60) de ladite autre mâchoire (50).

6. Dispositif de retrait de couronne dentaire selon l'une quelconque des revendications 1 à 5, dans lequel un ressort de torsion (70) fournit ladite sollicitation par ressort.

7. Dispositif de retrait de couronne dentaire selon l'une quelconque des revendications 1 à 6, dans lequel un ressort (70) fournissant ladite sollicitation par ressort desdites extrémités de mâchoire (40, 50) ensemble avec lesdites première et deuxième mâchoires (40, 50) comporte des extrémités (74, 78) imbriquées dans lesdites première et deuxième mâchoires, et/ou
dans lequel l'une desdites mâchoires (40, 50) présente une longueur réglable.

8. Dispositif de retrait de couronne dentaire selon l'une quelconque des revendications 1 à 7, comportant un ressort ondulé (82) sollicitant une position latérale de l'une au moins desdites mâchoires (40, 50) par rapport audit bras de pivotement (34).

9. Dispositif de retrait de couronne dentaire selon l'une quelconque des revendications 1 à 8, dans lequel l'une desdites mâchoires (50) comporte une dent (66) juxtaposant deux dents (48) de ladite mâchoire opposée (40), et/ou
dans lequel une vis (38) maintient lesdites mâchoires (40, 50) sur ledit bras de pivotement (34), et/ou
dans lequel un axe de pivotement desdites mâchoires (40, 50) coupe ledit premier axe de tige (22), et/ou
dans lequel ledit bras de pivotement (34) peut tourner par rapport audit manche (14).

10. Dispositif de retrait de couronne dentaire selon l'une quelconque des revendications 3 à 9, dans lequel l'un desdits œillets de mâchoire (58, 60) s'ajuste latéralement dans lesdits autres œillets de mâchoire (44), et ladite mâchoire (40) présentant des œillets (44) ajustés dans des œillets (58, 60) de ladite autre mâchoire (50) comporte une dent (66) juxtaposant deux dents (48) de ladite autre mâchoire (40) .

11. Dispositif de retrait de couronne dentaire comprenant :
un manche (14) ;
une tige allongée (20) faisant saillie le long d'un premier axe (22), ladite tige allongée (20) étant connectée pour un mouvement de va-et-vient par rapport audit manche (14) le long dudit premier axe ;
un moteur pour le déplacement de ladite tige allongée (20) ;
un adaptateur d'outil (26) relié à ladite tige allongée (20) le long d'une extrémité de ladite tige allongée (20) généralement opposée audit manche (14), ledit adaptateur d'outil (26) comportant une selle (28) pour le placement sur ladite tige allongée (20), ledit adaptateur d'outil (26) comportant un bras d'extension (30) s'étendant à partir de ladite selle, ledit adaptateur d'outil (26) comportant un bras de pivotement (34) relié perpendiculairement audit bras d'extension (30) et espacé dudit manche (14) ;
une mâchoire supérieure (40) présentant une connexion pivotante avec ledit bras de pivotement (34) ;
une mâchoire inférieure (50) opposée à ladite mâchoire supérieure (40) ;
un ressort sollicitant une extrémité de patte (46) desdites mâchoires (40, 50) ensemble ; et
**caractérisé en ce que** ladite mâchoire inférieure (50) présente une connexion pivotante avec ledit bras de pivotement (34), et **en ce que**
lesdites mâchoires supérieure et inférieure (40, 50) pivotent dans un plan coupant ladite tige (20).

12. Dispositif de retrait de couronne dentaire selon la revendication 11, dans lequel ladite selle (28) peut tourner sur ladite tige (20).

13. Dispositif de retrait de couronne dentaire comprenant :
un manche (219) ;
une tige allongée (212) faisant saillie le long d'un premier axe (232), ladite tige allongée (212) étant connectée pour un mouvement de va-et-vient par rapport audit manche (219) le long dudit premier axe ;
un moteur pour le déplacement de ladite tige allongée (212) ;
un adaptateur d'outil (210) relié à ladite tige allongée (212) le long d'une extrémité de ladite tige allongée (212) généralement opposée audit manche (219), ledit adaptateur d'outil (210) pouvant tourner par rapport audit manche (219), ledit adaptateur d'outil (210) comportant un bras d'extension (238) s'étendant à distance dudit manche (219), ledit adaptateur d'outil (210) comportant un bras de pivotement (240) de forme cylindrique relié perpendiculairement audit bras d'extension et espacé dudit manche (219) ;
une mâchoire supérieure (220) présentant une connexion pivotante avec ledit bras de pivotement (240) par le biais d'œillets doubles (244) espacés ;
une mâchoire inférieure (222) de longueur réglable, opposée à ladite mâchoire supérieure (220), ladite mâchoire inférieure présentant une connexion pivotante avec ledit bras de pivotement (240) par le biais d'œillets doubles (246), lesdits œillets de mâchoire supérieure (244) s'ajustant latéralement dans lesdits œillets de mâchoire inférieure (246) ;
ledit dispositif de retrait de couronne dentaire étant **caractérisé en ce qu'**il comprend en outre :
un ressort de torsion sollicitant une extrémité de patte desdites mâchoires ensemble, ledit ressort de torsion comportant une partie de spire encerclant ledit bras de pivotement (240) ; et
**en ce que** lesdites mâchoires supérieure et inférieure (220, 222) pivotent dans un plan parallèle audit premier axe (212) et décalé latéralement par rapport à celui-ci, et lesdites mâchoires présentant une connexion pivotante indépendante et unitaire avec ledit bras de pivotement (232).

14. Dispositif de retrait de couronne dentaire selon l'une quelconque des revendications 1 à 13, dans lequel une fréquence de déplacement réciproque de ladite tige allongée (20, 212) est réglable.
